(19) Europäisches Patentamt / European Patent Office / Office européen des brevets

(11) **EP 3 869 327 B1**

(12) **EUROPEAN PATENT SPECIFICATION**

(45) Date of publication and mention
of the grant of the patent:
**26.07.2023 Bulletin 2023/30**

(21) Application number: **18937378.0**

(22) Date of filing: **18.10.2018**

(51) International Patent Classification (IPC):
**G06F 7/552** *(2006.01)*

(52) Cooperative Patent Classification (CPC):
**G06F 7/5525**

(86) International application number:
**PCT/JP2018/038830**

(87) International publication number:
**WO 2020/079802 (23.04.2020 Gazette 2020/17)**

(54) **CALCULATION PROCESSING DEVICE AND CONTROL METHOD FOR CALCULATION PROCESSING DEVICE**

BERECHNUNGSVERARBEITUNGSVORRICHTUNG UND STEUERVERFAHREN FÜR EINE BERECHNUNGSVERARBEITUNGSVORRICHTUNG

DISPOSITIF DE TRAITEMENT DE CALCUL ET PROCÉDÉ DE COMMANDE POUR UN DISPOSITIF DE TRAITEMENT DE CALCUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.08.2021 Bulletin 2021/34**

(73) Proprietor: **FUJITSU LIMITED**
**Kanagawa 211-8588 (JP)**

(72) Inventors:
• **OSONOI, Takeshi**
**Kawasaki-shi, Kanagawa 211-8588 (JP)**
• **WADA, Hiroyuki**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(56) References cited:
**JP-A- H0 415 822     US-A1- 2013 262 541**

• **PRABHU J A ET AL: "167 MHz radix-8 divide and square root using overlapped radix-2 stages", COMPUTER ARITHMETIC, 1995., PROCEEDINGS OF THE 12TH SYMPOSIUM ON BATH, UK 19-21 JULY 1995, LOS ALAMITOS, CA, USA, IEEE COMPUT. SOC, US, 19 July 1995 (1995-07-19), pages 155-162, XP010146639, DOI: 10.1109/ARITH.1995.465363 ISBN: 978-0-8186-7089-3**
• **ERCEGOVAC M D ET AL: "RADIX-4 SQUARE ROOT WITHOUT INITIAL PLA", IEEE TRANSACTIONS ON COMPUTERS, IEEE, USA, vol. 39, no. 8, 1 August 1990 (1990-08-01), pages 1016-1024, XP000143032, ISSN: 0018-9340, DOI: 10.1109/12.57040**
• **BEHROOZ PARHAMI ED - PARHAMI BEHROOZ: "Computer Arithmetic, chapter 21: Square-Rooting methods", 1 January 2000 (2000-01-01), COMPUTER ARITHMETIC : ALGORITHMS AND HARDWARE DESIGNS, OXFORD UNIVERSITY PRESS, INC, NEW YORK, NY, USA, PAGE(S) 345 - 357, XP002253877, ISBN: 978-0-19-512583-2 * section 21.2 to 21.4 ***

**Description**

TECHNICAL FIELD

The present invention relates to an arithmetic processing unit and a control method for the arithmetic processing unit.

BACKGROUND ART

In recent years, the practical application of deep learning technique has been progressing in diverse fields, and a processor for the purpose of deep learning is required. While batch normalization is used to enhance training speed in deep learning, square root extraction operation is necessary for this batch normalization. Therefore, processors for the purpose of deep learning are required to execute the square root extraction operation at high speed.

The Sweeney, Robertson, Tocher (SRT) method and the non-restoring method are known as general algorithms for implementing the square root extraction operation in hardware. In the square root extraction operation based on these methods, $x = Q^2 + R$ is set for a radicand x, and the addition and subtraction of Q and R is repeated while this formula is satisfied. Here, Q denotes a partial quotient (a result of square root extraction halfway), and R indicates a partial remainder. When R is made close enough to 0, Q obtains a value close enough to a square root sqrt(x) of x.

When the above formula is expressed by a recurrence formula, following formula (1) is given.

$$Q_{i+1}\text{\textasciicircum}2 + R_{i+1}= Q_i\text{\textasciicircum}2 + R_i \ldots (1)$$

By transforming above formula (1), following formula (2) is worked out.

$$\begin{aligned} R_{i+1} &= R_i - Q_{i+1}\text{\textasciicircum}2 + Q_i\text{\textasciicircum}2 \\ &= R_i - (Q_i + q_i)\text{\textasciicircum}2 + Q_i\text{\textasciicircum}2 \\ &= R_i - 2Q_i * q_i - q_i\text{\textasciicircum}2 \ldots (2) \end{aligned}$$

The meaning of each variable is as follows.

$R_i$: Partial remainder of the i-th operation. $R_0 = x$.
$Q_i$: Partial quotient of the i-th operation. $Q_0 = 0$.
$q_i$: Part of the bit string of the quotient worked out in the i-th operation. $Q_i + q_i = Q_{i+1}$.

The variable $q_i$ starts from the most significant bit of the quotient. Each time i is incremented by one, the digits of $q_i$ are moved to a low-order end by the number of bits of the quotient worked out in one operation, and a plurality of candidates such as candidates that are integral multiples of the digits are prepared.

For example, in the case of the SRT method of radix-4, which works out two bits of the quotient in one operation, following formula (3) is given.

$$q_i = (-3 \text{ or } -2 \text{ or } -1 \text{ or } 0 \text{ or } +1 \text{ or } +2 \text{ or } +3) * 2\text{\textasciicircum}-2i \ldots (3)$$

In above formula (2), $Q_{i+1}$ approaches sqrt(x) by determining $q_i$ such that $R_{i+1}$ is made closer to 0.

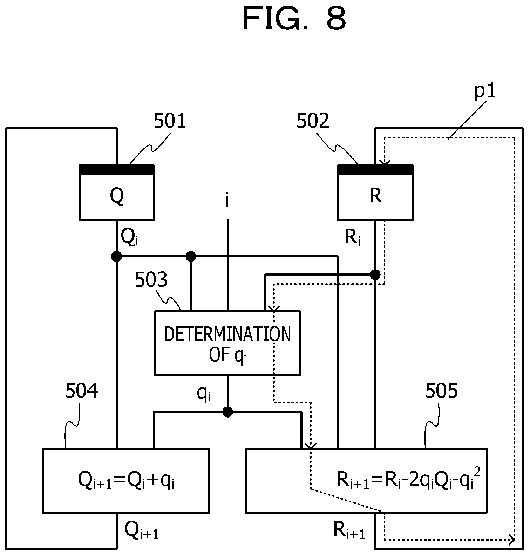

FIG. 8 is a diagram illustrating a configuration of a conventional square root extraction operation circuit, and illustrates an example in which above formula (2) is implemented on a digital circuit.

The operation circuit illustrated in FIG. 8 is a square root extraction operation circuit that performs square root extraction operation, and includes registers 501 and 502, and logic circuits 503, 504, and 505.

The register 501 is connected to the logic circuits 503, 504, and 505, and the register 502 is connected to the logic circuits 503 and 505. The register 501 is initialized with 0, and the register 502 is initialized with x.

A register value $Q_i$ read from the register 501 is input to each of the logic circuits 503, 504, and 505, and a register value $R_i$ read from the register 502 is input to each of the logic circuits 503 and 505. Hereinafter, the register value $Q_i$ read from the register 501 is sometimes referred to as an output $Q_i$ of the register 501. Similarly, hereinafter,

the register value $R_i$ read from the register 502 is sometimes referred to as an output $R_i$ of the register 502.

The logic circuit 503 is connected to each of the registers 501 and 502 and the logic circuits 504 and 505, and receives inputs of the output $Q_i$ of the register 501, the output $R_i$ of the register 502, and an operation count signal i.

The logic circuit 503 determines $q_i$ based on the output $Q_i$ of the register 501, the output $R_i$ of the register 502, and the operation count signal i. That is, the logic circuit 503 selects $q_i$ from among candidates indicated in formula (3) such that $R_{i+1}$ approaches 0 in above formula (2).

The logic circuit 503 inputs the determined $q_i$ to each of the logic circuits 504 and 505. The logic circuit 504 receives $Q_i$ and $q_i$ to perform the operation of $Q_{i+1} = Q_i + q_i$, and outputs $Q_{i+1}$. This output $Q_{i+1}$ of the logic circuit 504 is input to the register 501 to update the value of this register 501.

The logic circuit 505 receives $R_i$, $Q_i$, and $q_i$, to perform the operation of above formula (2), and outputs $R_{i+1}$. This output $R_{i+1}$ of the logic circuit 505 is input to the register 502 to update the value of this register 502.

By repeating the operations by the logic circuits 503 to 505 for a plurality of cycles, $Q_i$ approaches sqrt(x) . The operations are repeated until the required number of digits of $Q_i$ is worked out as the operation result, and thereafter $Q_i$ is output as the operation result.

CITATION LIST

PATENT DOCUMENT

Patent Document 1: Japanese Laid-open Patent Publication No. 09-269892
Patent Document 2: Japanese Laid-open Patent Publication No. 11-353158

See also:

PRABHU J A ET AL: "167 MHz radix-8 divide and square root using overlapped radix-2 stages" (COMPUTER ARITHMETIC, 1995., PROCEEDINGS OF THE 12TH SYMPOSIUM ON BATH, UK 19-21 JULY 1995, LOS ALAMITOS, CA, USA, IEEE COMPUT. SOC, US, 19 July 1995 (1995-07-19), pages 155-162, DOI: 10.1109/ARITH.1995.465363 ISBN: 978-0-8186-7089-3);
ERCEGOVAC M D ET AL: "RADIX-4 SQUARE ROOT WITHOUT INITIAL PLA" (IEEE TRANSACTIONS ON COMPUTERS, IEEE, USA, vol. 39, no. 8, 1 August 1990 (1990-08-01), pages 1016-1024, ISSN: 0018-9340, DOI: 10.1109/12.57040); and
BEHROOZ PARHAMI ED - PARHAMI BEHROOZ: "Computer Arithmetic, chapter 21: Square-Rooting methods" (1 January 2000 (2000-01-01), COMPUTER ARITHMETIC : ALGORITHMS AND HARDWARE DESIGNS, OXFORD UNIVERSITY PRESS, INC, NEW YORK, NY, USA, PAGE(S) 345 - 357, ISBN: 978-0-19-512583-2).

SUMMARY OF INVENTION

TECHNICAL PROBLEM

In the conventional square root extraction operation circuit illustrated in FIG. 8, a path p1 (see FIG. 8) that returns to the register 502 from the register 502 via the logic circuits 503 and 505 is a critical path in terms of delay.

In the square root extraction operation circuit, it is required to improve such a delay in the critical path.

In one aspect, the present invention aims to improve the delay in the critical path in the square root extraction operation circuit.

SOLUTION TO PROBLEM

For this purpose, there is provided an arithmetic processing unit as set out in Claim 1.

There is also provided a control method as set out in Claim 3.

ADVANTAGEOUS EFFECTS OF INVENTION

According to one embodiment, a delay in a critical path can be improved in a square root extraction operation circuit.

BRIEF DESCRIPTION OF DRAWINGS

FIG. 1 is a diagram illustrating a configuration of a square root extraction operation circuit as an example of an embodiment.

FIG. 2 is a flowchart for describing a process of the square root extraction operation circuit as an example of the embodiment.

FIG. 3 is a diagram illustrating a configuration in which the square root extraction operation circuit as an example of the embodiment is adapted to input and output of floating-point numbers.

FIG. 4 is a flowchart for describing a process of an operation circuit including the square root extraction operation circuit as an example of the embodiment.

FIG. 5 is a diagram illustrating a configuration of an operation circuit as a modification of the operation circuit illustrated in FIG. 3.

FIG. 6 is a diagram illustrating an initial value determination logic by an initial value determination circuit of the operation circuit as the modification of the embodiment.

FIG. 7 is a flowchart for describing a process of the operation circuit including a square root extraction operation circuit as the modification of the embodiment.

FIG. 8 is a diagram illustrating a configuration of a conventional square root extraction operation circuit.

DESCRIPTION OF EMBODIMENTS

There is described herein an arithmetic processing unit that computes a square root of a radicand, and includes: a first logic circuit that determines a part of a bit string of a quotient; a second logic circuit that calculates a first partial remainder based on the bit string and a partial remainder by performing a first operation other than an exponentiation operation in a partial remainder operation; and a third logic circuit that calculates the partial remainder by performing a second operation that includes the exponentiation operation, using the first partial remainder and the bit string.

Hereinafter, an embodiment relating to present arithmetic processing unit and control method for the arithmetic processing unit will be described with reference to the drawings. However, the embodiment to be described below is merely an example, and there is no intention to exclude application of various modifications and techniques not explicitly described in the embodiment. That is, the present embodiment can be variously modified (combining the embodiment and each of modifications, for example). Furthermore, each drawing is not intended to include only the constituent elements illustrated in the drawing, and may include other functions and the like.

(I) Description of One Embodiment

(A) Configuration

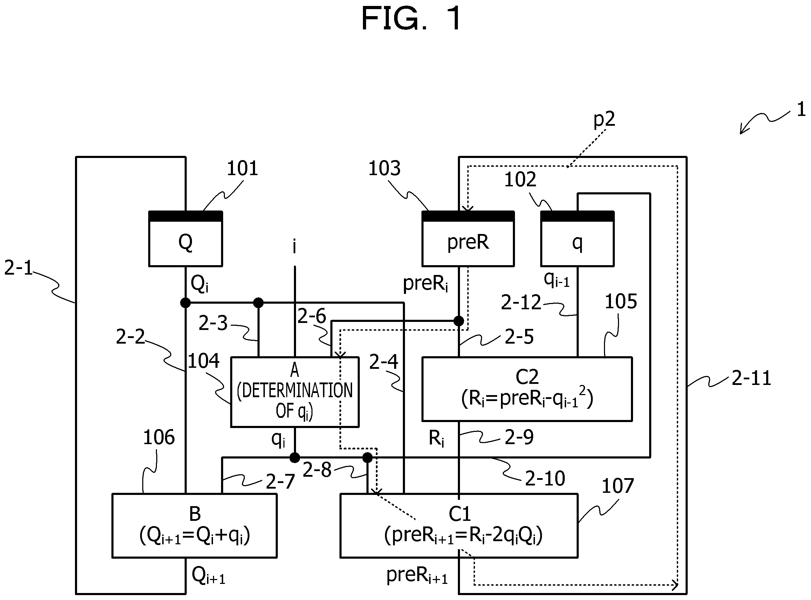

FIG. 1 is a diagram illustrating a configuration of a square root extraction operation circuit 1 as an example of an embodiment.

The square root extraction operation circuit 1 is an operation circuit that performs a square root extraction operation, and performs the operation of sqrt(x) of a radicand x based on the SRT method or the non-restoring method.

In the square root extraction operation based on the SRT method or the non-restoring method, $x = Q^2 + R$ is set for the radicand x, and the addition and subtraction of Q and R is repeated while this formula is satisfied. Q denotes a partial quotient (a result of square root extraction halfway), and R indicates a partial remainder. When R is made close enough to 0, Q obtains a value close enough to the square root sqrt(x) of x.

The square root extraction operation circuit 1 illustrated in FIG. 1 includes registers 101 to 103 and logic circuits 104 to 107. Hereinafter, the register 101 is sometimes referred to as a register Q. Similarly, the register 102 is sometimes referred to as a register q, and the register 103 is sometimes referred to as a register preR.

The register 101 is connected to each of the logic circuits 106, 104, and 107 via paths (communication routes) 2-2, 2-3, and 2-4. A register value $Q_i$ read from the register 101 is input to each of the logic circuits 104, 106, and 107. Hereinafter, the register value $Q_i$ read from the register 101 is sometimes referred to as an output $Q_i$ of the register 101.

The register 103 is connected to each of the logic circuits 104 and 105 via paths 2-6 and 2-5. A register value $preR_i$ read from the register 103 is input to each of the logic circuits 104 and 105. Hereinafter, the register value $preR_i$ read from the register 103 is sometimes referred to as an output $preR_i$ of the register 103.

The register 102 is connected to the logic circuit 105 via a path 2-12. A register value $q_{i-1}$ read from the register 102 is input to the logic circuit 105. Hereinafter, the register value $q_{i-1}$ read from the register 102 is sometimes referred to as an output $q_{i-1}$ of the register 102.

In the present square root extraction operation circuit 1, operations by the logic circuits 104 to 107, which will be described later, are repeated until a required number of bits of the quotient is reached (loop operations).

The logic circuit 104 is connected to the registers 101 and 103, and is also connected to each the logic circuits 106 and 107, and the register 102 via paths 2-7, 2-8, and 2-10. The output $Q_i$ of the register 101, the output $preR_i$ of the register 103, and a signal (operation count signal) i indicating the number of operations are input to the logic circuit 104. Furthermore, hereinafter, i is sometimes used also as a value indicating the number of operations.

The logic circuit 104 functions as a first logic circuit that determines a part of the bit string (partial quotient bit string) $q_i$ of a quotient worked out at the i-th operation, based on the output $Q_i$ of the register 101, the output $preR_i$ of the register 103, and the number of operations i.

Incidentally, in the SRT method and the non-restoring method, the partial quotient bit string $q_i$ is designated by verifying the partial quotient $Q_i$ and the partial remainder $R_i$. As characteristics of these algorithms, a valid solution can be obtained not only when verification is made by strict values of $Q_i$ and $R_i$, but also when verification is made by values containing errors with respect to $Q_i$ and $R_i$ to some extent.

Focusing on the logic circuit 505 in the conventional square root extraction operation circuit illustrated in FIG. 8, in above formula (2), as i increases, the term of $q_i{}^2$ relatively becomes small as compared with the terms of $R_i$ and $2q_i * Q_i$.

From the above, after i has become large to some extent, there is no difficulty in the action of the logic circuit 503 even if the term $q_i{}^2$ in formula (2) is excluded. This means that a change can be made such that above formula (2) is replaced with following formula (4) and an output $preR_{i+1}$ of the formula is used in the logic circuit 503.

$preR_{i+1} = R_i - 2Q_i * q_i$ ... (4)

However, while i is small, the term of $q_i{}^2$ is relatively large, and the difference between $R_{i+1}$ in above formula (2) and $preR_{i+1}$ in formula (4) is large. Accordingly, simply replacing $R_i$ with $preR_i$ sometimes does not work out a valid solution.

This is because $R_i$ needs to be made close to 0 in the i-th operation to an extent that R can converge to 0 by the i+1-th and following operations, but while i is small, appropriate $q_i$ cannot be selected by the logic circuit and $R_i$ does not approach 0 enough in some cases. In the present square root extraction operation circuit 1, in order to avoid this difficulty, an approach of mitigating the amount of movement of the digits of $q_i$ to a low-order end with respect to an increase in i is used while i is small (when i is equal to or less than a predetermined threshold value k).

For example, in the case of the SRT method of radix-4, $q_i$ is defined using following formula (5) in the logic circuit 104.

[Mathematical Formula 1]

$$
\left.
\begin{array}{l}
\text{When } i \leq k \text{ Holds, } q_i = (\text{-}3 \text{ or } \text{-}2 \text{ or } \text{-}1 \text{ or } 0 \text{ or } +1 \text{ or } +2 \text{ or } +3)*2^{\wedge}\text{-}i \\[4pt]
\text{When } i > k \text{ Holds, } q_i = (\text{-}3 \text{ or } \text{-}2 \text{ or } \text{-}1 \text{ or } 0 \text{ or } +1 \text{ or } +2 \text{ or } +3)*2^{\wedge}\text{-}(2i\text{-}k) \\[4pt]
k \text{ is integral constant.}
\end{array}
\right\} \quad \cdots (5)
$$

When $i \leq k$ holds, $q_i$ is larger than formula (3). Accordingly, even if $R_i$ does not approach 0 in one operation as much as necessary when formula (2) is employed, it becomes possible to converge $R_i$ to 0 in following operations.

In the present square root extraction operation circuit 1, one bit of solution is worked out per cycle while i is equal to or less than the threshold value k, and two bits of solution are worked out per cycle after i has become larger than the threshold value k.

In the square root extraction operation circuit 1 illustrated in FIG. 1, the logic circuit 104 selects $q_i$ from among candidates indicated in formula (5) such that $R_{i+1}$ approaches 0 in formula (4).

The value $q_i$ determined by the logic circuit 104 is input to each of the logic circuit 106 via the path 2-7, the logic circuit 107 via the path 2-8, and the register 102 via the path 2-10.

In the logic circuit 106, $Q_i$ is input from the register 101 via the path 2-2 and $q_i$ is input from the logic circuit 104 via the path 2-7, individually.

The logic circuit 106 receives $Q_i$ and $q_i$ to perform the operation of $Q_{i+1} = Q_i + q_i$, and outputs $Q_{i+1}$. The logic circuit 106 is connected to the register 101 via a path 2-1, and the output $Q_{i+1}$ of the logic circuit 106 is input to the register 101 via this path 2-1 to update the value of this register 101.

The logic circuit 105 performs the operation of the term of $q_i{}^2$ excluded in above formula (4). The value $q_i$ determined by the logic circuit 104 is stored in the register 102 via the path 2-10 and temporarily held, and then input to the logic circuit 105 in the next cycle as a value $q_{i-1}$ of the preceding cycle. Furthermore, $preR_i$ of the register 103 is also input to the logic circuit 105 via the path 2-5.

While $q_i$ determined by the logic circuit 104 is input to the logic circuits 106 and 107, $q_{i-1}$ at a cycle immediately preceding the cycle of $q_i$ input to these logic circuits 106 and 107 is input to the logic circuit 105.

The logic circuit 105 receives $preR_i$ of the register 103 and $q_{i-1}$ of the register 102 to perform the operation of following formula (6), and outputs $R_i$.

$$R_i = preR_i - q_{i-1}\textasciicircum 2 \ \ldots \ (6)$$

The logic circuit 105 functions as a third logic circuit that performs a second operation (formula (6)) including an exponentiation operation ($q_{i-1}\textasciicircum 2$), using a first partial remainder ($preR_i$) and a bit string ($q_i$) to calculate a partial remainder ($R_i$).

The logic circuit 105 is connected to the logic circuit 107 via a path 2-9, and the output $R_i$ of the logic circuit 105 is input to the logic circuit 107 via this path 2-9.

The logic circuit 107 is connected to each of the logic circuit 104 via the path 2-8, the register 101 via the path 2-4, the logic circuit 105 via the path 2-9, and the register 103 via a path 2-11.

The logic circuit 107 performs the operation of above formula (4) based on $q_i$ output from the logic circuit 104, $R_i$ output from the logic circuit 105, and Qi read from the register 101, and outputs $preR_{i+1}$. This output $preR_{i+1}$ of the logic circuit 107 is input to the register 103 via the path 2-11 to update the value of this register 103.

That is, the logic circuit 107 functions as a second logic circuit that calculates a first partial remainder ($preR_i$) based on the bit string ($q_i$) and the partial remainder (Ri) by performing a first operation (formula (4)) other than the exponentiation operation ($q_{i-1}\textasciicircum 2$) in a partial remainder operation.

In the present square root extraction operation circuit 1, the logic circuit 105 is arranged between the register 103 and the logic circuit 107 so as to be in parallel with the logic circuit 104, with respect to the path (a critical path in terms of delay) that links the register 103, the path 2-6, the logic circuit 104, the path 2-8, the logic circuit 107, and the path 2-11. Furthermore, the logic circuit 105 is connected in series with the logic circuit 107 at a position on an upstream side of the logic circuit 107.

Then, the logic circuit 105 is provided away from the critical path in terms of delay in the present square root extraction operation circuit 1 (see p2 in FIG. 1), and is not included in the critical path. That is, in the present square root extraction operation circuit 1, the logic circuit 105 that performs the operation of the term of $qi\textasciicircum 2$ is provided outside the critical path in terms of delay.

In the present square root extraction operation circuit 1, $Q_i$ approaches sqrt(x) by repeating the operations by the logic circuits 104 to 107 for a plurality of cycles. The operations are repeated until the required number of digits of $Q_i$ is worked out as the operation result, and thereafter $Q_i$ is output as the operation result.

(B) Action

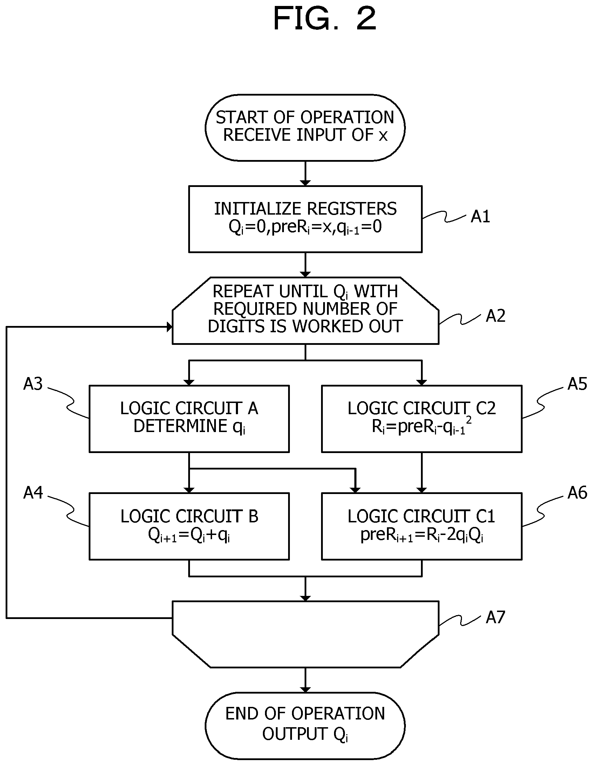

The process of the square root extraction operation circuit 1 as an example of the embodiment configured as described above will be described with reference to the flowchart (steps A1 to A7) illustrated in FIG. 2.

In step A1, the registers 101 to 103 are initialized. The initialization of the registers 101 to 103 may be performed by, for example, a control device (not illustrated) located outside the square root extraction operation circuit 1.

By initializing each of the registers 101 to 103, the register value $Q_i = 0$ of the register 101, the register value $q_{i-1} = 0$ of the register 102, and the register value $preR_i = x$ of the register 103 are given.

In step A2, a loop process is started in which the control up to step A7 is repeatedly carried out until $Q_i$ with the required number of digits is worked out in the square root extraction operation of the processing target.

The output $Q_i$ of the register Q (register 101), the output $preR_i$ of a register preR (register 103), and the number of operations i are input to a logic circuit A (logic circuit 104).

In step A3, the logic circuit A performs the operation of above formula (5) based on input $Q_i$, $preR_i$ and i to determine $q_i$, and outputs determined $q_i$.

The output $Q_i$ of the register Q (register 101) and the output $q_i$ of the logic circuit A (logic circuit 104) are input to a logic circuit B (106).

In step A4, the logic circuit B performs the operation of $Q_{i+1} = Q_i + q_i$ based on $Q_i$ and $q_i$, and outputs $Q_{i+1}$. Output $Q_{i+1}$ is input to the register Q to update the register value of this register Q.

Meanwhile, $q_i$ determined by the logic circuit A is temporarily held in the register q (register 102), and then input to a logic circuit C2 (logic circuit 105) as $q_{i-1}$ in the next cycle. Furthermore, the output $preR_i$ of the register preR (register 103) is also input to the logic circuit C2 (logic circuit 105).

In step A5, the logic circuit C2 performs the operation of formula (6) based on $preR_i$ and $q_{i-1}$, and outputs $R_i$.

$R_i$ output from the logic circuit C2, $q_i$ output from the logic circuit A, and the output $Q_i$ of the register Q are input to a logic circuit C1 (logic circuit 107).

In step A6, the logic circuit 107 performs the operation of above formula (4) based on $q_i$, $R_i$, and $Q_i$, and outputs

$preR_{i+1}$.

Thereafter, the control advances to step A7. In step A7, a loop end process corresponding to step A2 is carried out. Here, when the required number of digits of $Q_i$ is worked out, the arithmetic process by the present square root extraction operation circuit 1 is ended. Calculated $Q_i$ is output to a subsequent processing unit (for example, another operation circuit).

(C) Effects

As described above, according to the square root extraction operation circuit 1 as an example of the embodiment, the logic circuit 105 performs the operation of the term of $q_i{}^{\wedge}2$ by performing the operation of formula (6). This eliminates the necessity to perform the operation of $q_i{}^{\wedge}2$ in the logic circuit 107 and enables the reduction of the number of logic stages of the logic circuit 107. Consequently, the delay in the logic circuit 107 can be reduced.

In the present square root extraction operation circuit 1, the path p2 (see FIG. 1) that returns to the register 103 from the register 103 via the logic circuits 104 and 107 is a critical path in terms of delay.

Then, since the logic circuit 107 can be configured with a small number of logic stages and the delay can be shortened, the total delay in the critical path p2 of the operation circuit 1 can be made shorter. That is, the total delay in the critical path p2 of the present square root extraction operation circuit 1 can be made short as compared with the critical path p1 of the conventional square root extraction operation circuit illustrated in FIG. 8, and the improvement of the critical path can be achieved.

The present square root extraction operation circuit 1 can improve the delay in the critical path when performing the square root extraction operation based on the SRT method or the non-restoring method.

(II) Application to Operation Circuit

(A) Configuration

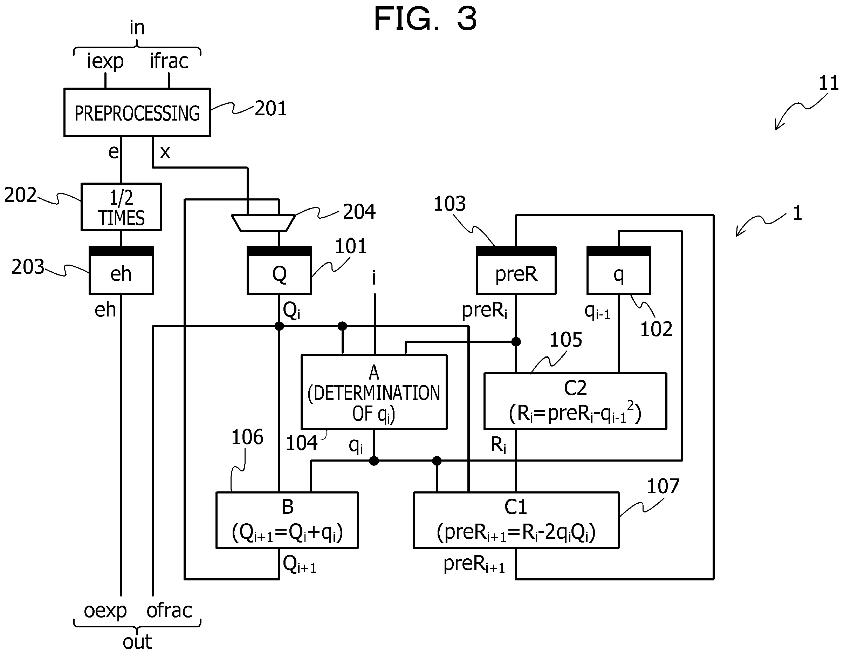

FIG. 3 illustrates a configuration in which the square root extraction operation circuit 1 of the above-described embodiment is adapted with input and output of floating-point numbers.

Note that, in the drawing, similar parts to the aforementioned parts are denoted by the same reference signs as those of the aforementioned parts, and thus the description thereof will be omitted. Furthermore, in FIG. 3, the illustration of the reference signs of the paths illustrated in FIG. 1 is omitted.

An operation circuit 11 illustrated in FIG. 3 includes a preprocessing circuit 201, a 1/2-time circuit 202, a register 203, and a selector 204, in addition to the square root extraction operation circuit 1 illustrated in FIG. 1.

For a floating-point number in, this operation circuit 11 illustrated in FIG. 3 works out a floating-point number out of a square root of in.

It is assumed that in and out include exponential parts iexp and oexp and mantissa parts ifrac and ofrac as illustrated in following formulas (7) and (8). The exponential parts iexp and oexp are integers, and the mantissa parts ifrac and ofrac are real numbers equal to or greater than 1 but less than 2.

$$\mathtt{in\ =\ 2^{\wedge}iexp\ *\ ifrac\ \ldots\ (7)}$$

$$\mathtt{out\ =\ 2^{\wedge}oexp\ *\ ofrac\ \ldots\ (8)}$$

In the present square root extraction operation circuit 1, a corrected exponential part e and a corrected mantissa part x are generated based on iexp and ifrac, and out is generated based on these e and x. Above-mentioned in and e and x have the relationship of following formula (9).

$$\mathtt{in\ =\ 2^{\wedge}e\ *\ x\ \ldots\ (9)}$$

These e and x are designated by following formulas (10) and (11).

$$\text{When iexp is an even number, e = iexp, x = ifrac ... (10)}$$

$$\text{When iexp is an odd number, e = iexp - 1, x = ifrac * 2 ... (11)}$$

From above formula (9), the square root of in can be worked out by following formula (12). In the formula, eh = e/2 holds.

$$\text{sqrt(in) = 2\^eh * sqrt(x) ... (12)}$$

From above formulas (10) and (11), e necessarily has an even number, and thus eh is given as an integer. Furthermore, since x is a real number equal to or greater than 1 but less than 4, sqrt (x) is given as a real number equal to or greater than 1 but less than 2. Therefore, comparing above formulas (8) and (12), it can be seen that oexp = eh and ofrac = sqrt(x) hold, and out can be worked out by performing the operation of eh and sqrt(x).

The floating-point number in (iexp, ifrac) is input to the preprocessing circuit 201. The preprocessing circuit 201 calculates (generates) the corrected exponential part e and the corrected mantissa part x based on above formulas (10) and (11), using input in (iexp, ifrac).

Calculated e is input to the 1/2-time circuit 202. The 1/2-time circuit 202 multiplies input e by 1/2 and outputs multiplied e as eh (eh = e/2). Note that the 1/2-time circuit 202 achieves the multiplication of e by 1/2 by shifting e to the right by one bit. Output eh is input to the register 203. A register value eh read from the register 203 is output as oexp.

The register value eh read from the register 203 may be referred to as an output eh of the register 203.

The mantissa part x output from the preprocessing circuit 201 is input to the selector 204. The selector 204 selects the output x of the preprocessing circuit 201 only when the register 101 is initialized, and selects the output of the logic circuit 106 otherwise to output the selected output.

That is, x output from the preprocessing circuit 201 is input to the register 101 after passing through the selector 204.

After x is input to the register 101, the square root extraction operation circuit 1 performs the operation of sqrt(x). Note that the operation of sqrt(x) by the square root extraction operation circuit 1 is similar to the process described above with reference to FIGs. 1 and 2, and thus the description thereof will be omitted. When the square root extraction operation circuit 1 completes the operation of sqrt(x), $Q_i$ becomes sqrt(x) and $Q_i$ is output as ofrac.

(B) Action

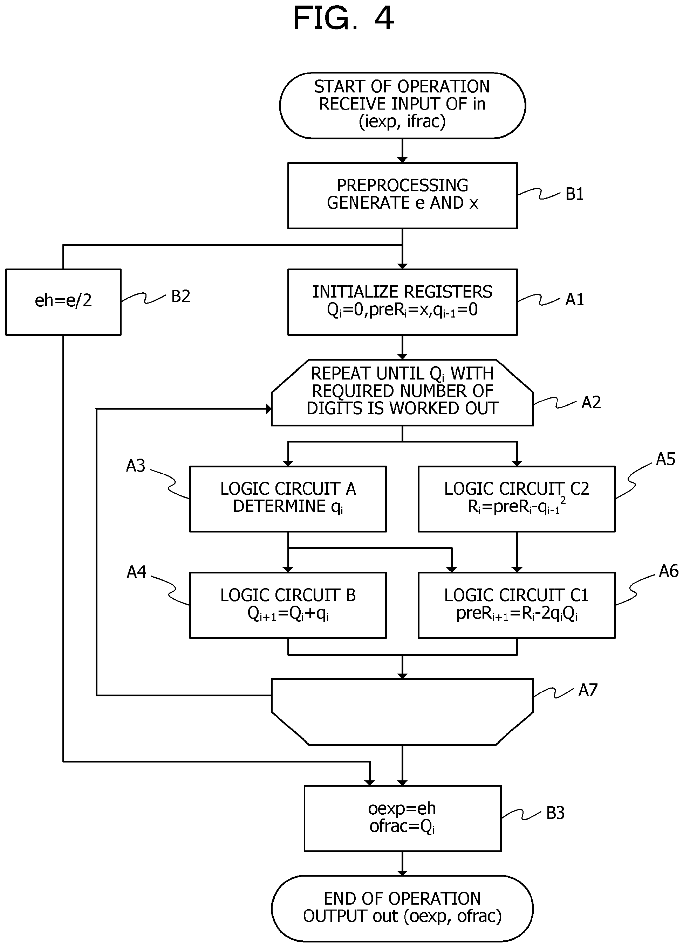

The process of the operation circuit 11 including the square root extraction operation circuit 1 as an example of the embodiment configured as described above will be described with reference to the flowchart (steps A1 to A7, B1 to B3) illustrated in FIG. 4.

Note that, in the drawing, similar processes to the aforementioned processes are denoted by the same reference signs as those of the aforementioned processes, and thus the description thereof will be omitted.

When the operation is started, for example, in (iexp, ifrac) is input from a control device (not illustrated) located outside the square root extraction operation circuit 1.

In step B1, the preprocessing circuit 201 calculates (generates) the corrected exponential part e and the corrected mantissa part x based on above formulas (10) and (11), using input in (iexp, ifrac). Calculated e is input to the 1/2-time circuit 202.

In step B2, the 1/2-time circuit 202 multiplies input e by 1/2 and outputs multiplied e as eh (eh = e/2) . Thereafter, the process proceeds to step B3.

Furthermore, x calculated by the preprocessing circuit 201 is input to the selector 204. At the time of initializing the register 101, the selector 204 employs the output x of the preprocessing circuit 201 to input to the register 101. Thereafter, the process proceeds to step A1. After the processes in steps A1 to A7 are completed, the process proceeds to step B3.

In step B3, $Q_i$ is output as ofrac and eh is output as oexp. That is, out (oexp, ofrac) is output and the process ends. Output out is output to a subsequent processing unit (for example, another operation circuit).

(C) Effects

As described above, according to the operation circuit 11, since the square root extraction operation circuit 1 is included, similar action effects to those of the above-described embodiment can be exhausted. That is, the delay in the critical path when the square root extraction operation is performed based on the SRT method or the non-restoring method can be improved.

(III) Modification of Application to Operation Circuit

(A) Configuration

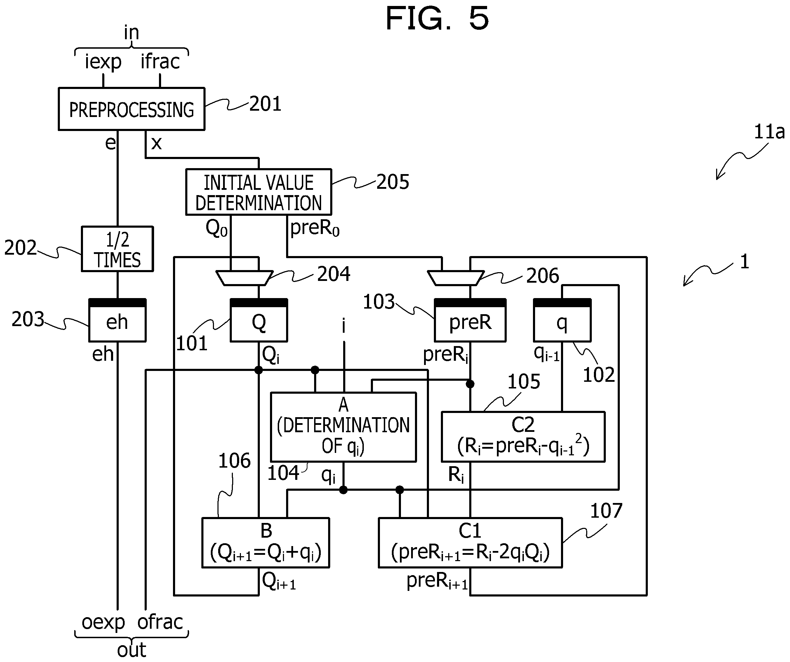

FIG. 5 is a diagram illustrating a configuration of an operation circuit 11a as a modification of the operation circuit 11 illustrated in FIG. 3. Note that, in the drawing, similar parts to the aforementioned parts are denoted by the same reference signs as those of the aforementioned parts, and thus the description thereof will be omitted. Furthermore, in FIG. 5, the illustration of the reference signs of the paths illustrated in FIG. 1 is omitted.

The operation circuit 11a has a configuration for speeding up the solution derivation of the operation circuit illustrated in FIG. 3.

In the square root extraction operation circuit 1 illustrated in FIG. 1, as a workaround for the difficulty that $R_i$ converges slowly while i is small, the digits of $q_i$ are moved to a low-order end by one bit at a time (the solution is derived by one bit at a time) while i is equal to or less than the threshold value k, and after i has become larger than the threshold value k, the digits are moved to a low-order end by two bits at a time (the solution is derived by two bits at a time), as indicated by formula (5).

That is, in the square root extraction operation circuit 1 illustrated in FIG. 1, one bit of solution is worked out per cycle while i is equal to or less than the threshold value k, and two bits of solution are worked out per cycle after i has become larger than the threshold value k.

In contrast to this, in the present operation circuit 11a, two bits are always worked out per cycle regardless of i. This can make the latency in the solution derivation in the present operation circuit 11a shorter.

As illustrated in FIG. 5, the operation circuit 11a includes an initial value determination circuit 205 and a selector 206, in addition to the operation circuit 11 illustrated in FIG. 3.

The corrected mantissa part x output from the preprocessing circuit 201 is input to the initial value determination circuit 205. The initial value determination circuit 205 determines an initial value $Q_0$ of the partial quotient based on x input from the preprocessing circuit 201.

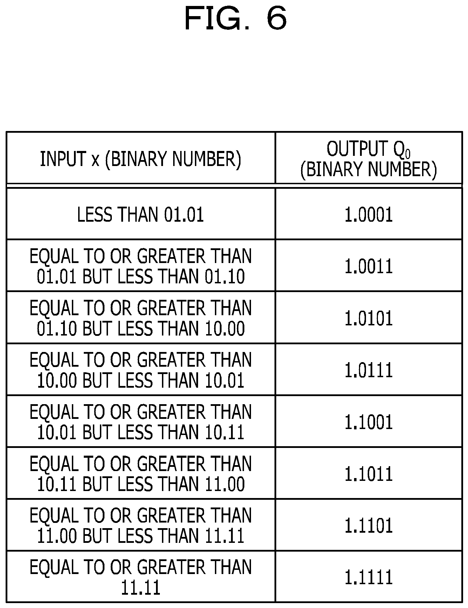

FIG. 6 is a diagram illustrating an initial value determination logic by the initial value determination circuit 205 of the operation circuit 11a as the modification of the embodiment.

This FIG. 6 illustrates a configuration in which the input x (corrected mantissa part) and the output $Q_0$ (the initial value of the partial quotient) are associated with each other. Note that, in the example illustrated in FIG. 6, the input x and the output $Q_0$ are represented by binary numbers.

The initial value determination circuit 205 determines the output $Q_0$ corresponding to the input value of x, for example, with reference to this determination logic illustrated in FIG. 6. For example, when the input x = 10.10 is given, the initial value determination circuit 205 determines the output Q0 = 1.1001 and outputs the determined output.

In the present operation circuit 11, the initial value $Q_0$ of $Q_i$ is finely classified according to the high-order bits of x, and a few high-order bits of $Q_i$ are defined at the time of initialization. This makes it possible to begin the determination of $q_i$ with a bit following the few high-order bits.

Since $q_i$ begins from the low-order bit, the above-mentioned difficulty that the term of $q_i{}^2$ is relatively small even when i is small in above formula (4) and $R_i$ converges slowly while i is small can be avoided, and the solution can be derived by two bits at a time regardless of i.

Note that the function corresponding to the determination logic illustrated in FIG. 6 may be achieved by, for example, information stored in a storage device (a register or the like) (not illustrated), and can be variously modified.

Furthermore, the determination logic referred to by the initial value determination circuit 205 is not limited to the one illustrated in FIG. 6, and can be appropriately changed.

$Q_0$ output from the initial value determination circuit 205 is input to the selector 204.

Furthermore, the initial value determination circuit 205 determines (generates) $preR_0$ by performing the operation of following formula (13) based on x and $Q_0$.

$$preR_0 = x - Q_0{}^2 \ \ldots \ \text{Formula (13)}$$

Above-mentioned $preR_0$ determined by the initial value determination circuit 205 is input to the register 103 (register preR) via the selector 206.

$Q_0$ output from the initial value determination circuit 205 is input to the selector 204. The selector 204 selects the output $Q_0$ of the initial value determination circuit 205 only when the register 101 is initialized, and selects the output of the logic circuit 106 otherwise to output the selected output.

The selector 206 selects the output $preR_0$ of the initial value determination circuit 205 only when the register 103 is initialized, and selects the output of the logic circuit 107 otherwise to output the selected output.

(B) Action

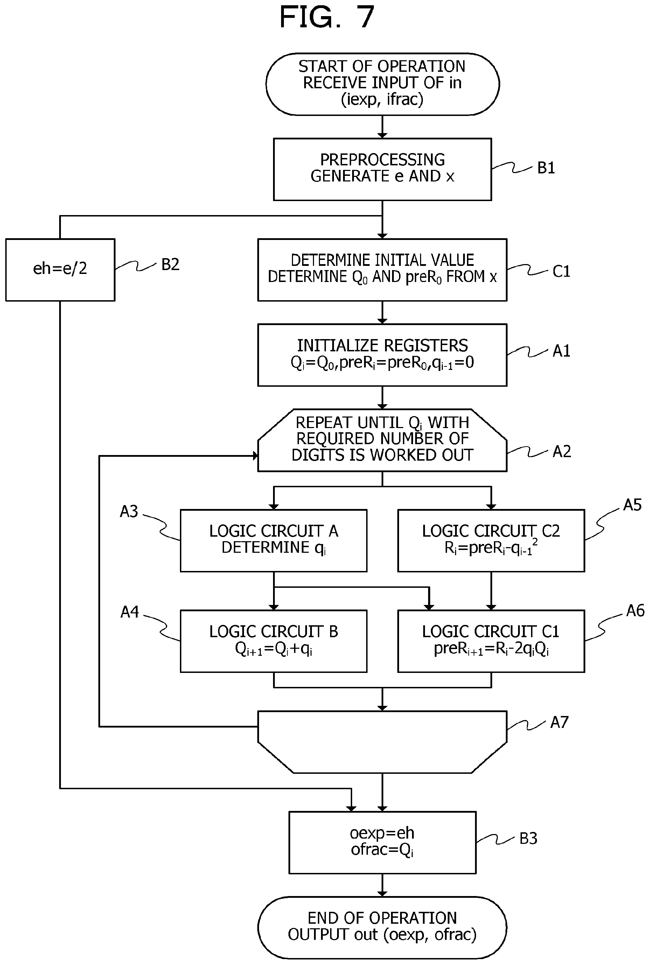

The process of the operation circuit 11a as a modification of the embodiment configured as described above will be described with reference to the flowchart (steps A1 to A7, B1 to B3, C1) illustrated in FIG. 7.

Note that, in the drawing, similar processes to the aforementioned processes are denoted by the same reference signs as those of the aforementioned processes, and thus the description thereof will be omitted.

When the operation is started, for example, in (iexp, ifrac) is input from a control device (not illustrated) located outside the square root extraction operation circuit 1.

In step B1, the preprocessing circuit 201 calculates (generates) the corrected exponential part e and the corrected mantissa part x based on above formulas (10) and (11), using input in (iexp, ifrac). Calculated e is input to the 1/2-time circuit 202.

Above-mentioned x calculated by the preprocessing circuit 201 is input to the initial value determination circuit 205. The initial value determination circuit 205 determines the initial value $Q_0$ of the partial quotient based on x input from the preprocessing circuit 201.

In step C1, the initial value determination circuit 205 determines (generates) $preR_0$ by performing the operation of above formula (13) based on x and $Q_0$.

At the time of initializing the register 101, the selector 204 employs the output $Q_0$ of the initial value determination circuit 205 to input to the register 101. Furthermore, at the time of initializing the register 103, the selector 206 employs the output $preR_0$ of the initial value determination circuit 205 to input to the register 103. Thereafter, the process proceeds to step A1.

After the processes in steps A1 to A7 are completed, the process proceeds to step B3. In step B3, $Q_i$ is output as ofrac and eh is output as oexp. That is, out (oexp, ofrac) is output and the process ends. Output out is output to a subsequent processing unit (for example, another operation circuit).

(C) Effects

As described above, according to the operation circuit 11a of the present modification, similar action effects to those of the application example illustrated in FIG. 3 can be obtained.

Furthermore, in the operation circuit 11 illustrated in FIG. 3, one bit of solution is worked out per cycle while i is small, and two bits of solution are worked out per cycle after i has become large, whereas the operation circuit 11a of the present modification always works out two bits per cycle regardless of i. This can make the latency in the solution derivation shorter in the operation circuit 11a of the present modification.

(IV) Others

The disclosed technique is not limited to the embodiment described above, and various modifications may be made. Each of the configurations and processes of the present embodiment can be selected or omitted as needed or may be appropriately combined.

Furthermore, the present embodiment can be implemented and manufactured by those skilled in the art according to the above-described disclosure. For example, in the above-described embodiment, a case where the SRT method or the non-restoring method is used is described, but the present invention is not limited to this example, and may be appropriately changed.

REFERENCE SIGNS LIST

    1 Square root extraction operation circuit
    2-1 to 2-12 Path
    11, 11a Operation circuit

101 to 103, 203 Register
104 to 107 Logic circuit
201 Preprocessing circuit
202 1/2-time circuit
204, 206 Selector
205 Initial value determination circuit

**Claims**

1. An arithmetic processing unit (1) configured to compute a square root of a radicand,
   the arithmetic processing unit comprising:

   a first logic circuit (104) configured to determine a first bit string (qi) which is a part of a bit string of a quotient (Q) ;
   a second logic circuit (107) configured to calculate a first partial remainder (R) based on the first bit string and a partial remainder by performing a first operation that does not include an exponentiation operation in a partial remainder operation;
   a third logic circuit (105) configured to calculate the partial remainder by performing a second operation that includes an exponentiation operation, using the first partial remainder and the first bit stringy
   a first register (102) configured to store the first bit string determined by the first logic circuit, wherein the third logic circuit is configured to calculate the partial remainder using the first bit string stored in the first register in a preceding cycle in repetitions of operations; and

   a second register (103) configured to store the first partial remainder calculated by the second logic circuit, wherein the first logic circuit is configured to determine the first bit string using the first partial remainder stored in the second register in a preceding cycle.

2. The arithmetic processing unit (1) according to claim 1, wherein

   the first logic circuit (104) is configured to
   work out a solution by a first number of bits per cycle when a number of repetitions of operations (i) is equal to or less than a predetermined threshold value, and to work out a solution by a second number of bits greater than the first number of bits per cycle when the number of repetitions of operations is greater than the threshold value.

3. A control method for an arithmetic processing unit (1) that computes a square root of a radicand, the arithmetic processing method comprising:

   in the arithmetic processing unit,
   a process, by a first logic circuit (104), of determining a first bit string (qi) which is a part of a bit string of a quotient (Q) ;
   a process of storing the first bit string determined by the first logic circuit in a first register (102);
   a process, by a second logic circuit (107), of calculating a first partial remainder (R) based on the first bit string and a partial remainder by performing a first operation that does not include an exponentiation operation in a partial remainder operation;
   a process of storing the first partial remainder calculated by the second logic circuit in a second register (103); and
   a process, by a third logic circuit (105), of calculating the partial remainder by performing a second operation that includes an exponentiation operation, using the first partial remainder and the first bit string stored in the first register in a preceding cycle in repetitions of operations;
   wherein the process of determining, by the first logic circuit the first bit string uses the first partial remainder stored in the second register in a preceding cycle.

4. The control method for the arithmetic processing unit (1) according to claim 3, further comprising a process, by the first logic circuit (104), of working out a solution by a first number of bits per cycle when a number of repetitions of operations (i) is equal to or less than a predetermined threshold value, and working out a solution by a second number of bits greater than the first number of bits per cycle when the number of repetitions of operations is greater than the threshold value.

**Patentansprüche**

1. Arithmetische Verarbeitungseinheit (1), die zum Berechnen einer Quadratwurzel eines Radikanden konfiguriert ist, wobei die arithmetische Verarbeitungseinheit umfasst:

eine erste logische Schaltung (104), die zum Bestimmen einer ersten Bit-Folge (qi) konfiguriert ist, welche ein Teil einer Bit-Folge eines Quotienten (Q) ist;

eine zweite logische Schaltung (107), die zum Berechnen eines ersten Teilrests (R) basierend auf der ersten Bit-Folge und eines Teilrests durch Durchführen einer ersten Operation konfiguriert ist, die keine Potenzierungsoperation in einer Teilrestoperation umfasst;

eine dritte logische Schaltung (105), die zum Berechnen des Teilrests durch Durchführen einer zweiten Operation konfiguriert ist, die eine Potenzierungsoperation durch Verwenden des ersten Teilrests und der ersten Bit-Folge beinhaltet;

ein erstes Verzeichnis (102), das zum Speichern der ersten Bit-Folge, die durch die erste logische Schaltung bestimmt wird, konfiguriert ist, wobei die dritte logische Schaltung zum Berechnen des Teilrests durch Verwenden der ersten Bit-Folge, die in dem ersten Verzeichnis gespeichert ist, in einem vorherigen Zyklus in Operationswiederholungen konfiguriert ist; und

ein zweites Verzeichnis (103), das zum Speichern des ersten Teilrests, der durch die zweite logische Schaltung berechnet wird, konfiguriert ist, wobei die erste logische Schaltung zum Bestimmen der ersten Bit-Folge durch Verwenden des ersten Teilrests, der in dem zweiten Verzeichnis gespeichert ist, in einem vorherigen Zyklus konfiguriert ist.

2. Arithmetische Verarbeitungseinheit (1) nach Anspruch 1, wobei
die erste logische Schaltung (104) zum Ausarbeiten einer Lösung durch eine erste Anzahl an Bits je Zyklus konfiguriert ist, wenn eine Anzahl an Operationswiederholungen (i) gleich wie oder kleiner als ein vorbestimmter Schwellenwert ist, und zum Ausarbeiten einer Lösung durch eine zweite Anzahl an Bits, größer als die erste Anzahl an Bits je Zyklus, wenn die Anzahl an Operationswiederholungen größer als der Schwellenwert ist.

3. Steuerverfahren für eine arithmetische Verarbeitungseinheit (1), die eine Quadratwurzel eines Radikanden berechnet, wobei das arithmetische Verarbeitungsverfahren umfasst:

die arithmetische Verarbeitungseinheit,

einen Prozess, durch eine erste logische Schaltung (104), zum Bestimmen einer ersten Bit-Folge (qi), welche ein Teil einer Bit-Folge eines Quotienten (Q) ist;

einen Prozess zum Speichern der von der ersten logischen Schaltung bestimmten ersten Bit-Folge in einem ersten Verzeichnis (102);

einen Prozess, durch eine zweite logische Schaltung (107), zum Berechnen eines ersten Teilrests (R) basierend auf der ersten Bit-Folge und eines Teilrests durch Durchführen einer ersten Operation, die keine Potenzierungsoperation beinhaltet, in einer Teilrestoperation;

einen Prozess zum Speichern des durch die zweite logische Schaltung berechneten ersten Teilrests in einem zweiten Verzeichnis (103); und

einen Prozess, durch eine dritte logische Schaltung (105), zum Berechnen des Teilrests durch Durchführen einer zweiten Operation, die eine Potenzierungsoperation beinhaltet, durch Verwenden des ersten Teilrests und der ersten Bit-Folge, die in dem ersten Verzeichnis gespeichert sind, in einem vorherigen Zyklus in Operationswiederholungen;

wobei der Prozess zum Bestimmen durch die erste logische Schaltung der ersten Bit-Folge den ersten Teilrest, der in dem zweiten Verzeichnis gespeichert ist, in einem vorherigen Zyklus verwendet.

4. Steuerverfahren für eine arithmetische Verarbeitungseinheit (1) nach Anspruch 3, weiter umfassend
einen Prozess, durch die erste logische Schaltung (104), zum Ausarbeiten einer Lösung durch eine erste Anzahl an Bits je Zyklus, wenn eine Anzahl an Operationswiederholungen (i) gleich wie oder kleiner als ein vorbestimmter Schwellenwert ist, und Ausarbeiten einer Lösung durch eine zweite Anzahl an Bits, größer als die erste Anzahl an Bits je Zyklus, wenn die Anzahl an Operationswiederholungen größer als der Schwellenwert ist.

**Revendications**

1. Unité de traitement arithmétique (1) configurée pour calculer une racine carrée d'un radical,

l'unité de traitement arithmétique comprenant :

un premier circuit logique (104) configuré pour déterminer une première chaîne de bits (qi) qui est une partie d'une chaîne de bits d'un quotient (Q) ;

un deuxième circuit logique (107) configuré pour calculer un premier reste partiel (R) sur la base de la première chaîne de bits et un reste partiel en réalisant une première opération qui n'inclut pas une opération exponentielle dans une opération de reste partiel ;

un troisième circuit logique (105) configuré pour calculer le reste partiel en réalisant une seconde opération qui inclut une opération exponentielle, en utilisant le premier reste partiel et la première chaîne de bits ;

un premier registre (102) configuré pour stocker la première chaîne de bits déterminée par le premier circuit logique, dans lequel le troisième circuit logique est configuré pour calculer le reste partiel en utilisant la première chaîne de bits stockée dans le premier registre dans un cycle précédent dans des répétitions d'opérations ; et

un second registre (103) configuré pour stocker le premier reste partiel calculé par le deuxième circuit logique, dans lequel le premier circuit logique est configuré pour déterminer la première chaîne de bits en utilisant le premier reste partiel stocké dans le second registre dans un cycle précédent.

2.  Unité de traitement arithmétique (1) selon la revendication 1, dans laquelle
    le premier circuit logique (104) est configuré pour trouver une solution par un premier nombre de bits par cycle quand un nombre de répétitions d'opérations (i) est égal ou inférieur à une valeur de seuil prédéterminée, et pour trouver une solution par un second nombre de bits supérieur au premier nombre de bits par cycle quand le nombre de répétitions d'opérations est supérieur à la valeur de seuil prédéterminée.

3.  Procédé de commande pour une unité de traitement arithmétique (1) qui calcule une racine carrée d'un radical, le procédé de traitement arithmétique comprenant :

dans l'unité de traitement arithmétique,

un processus, par un premier circuit logique (104), de détermination d'une première chaîne de bits (qi) qui est une partie d'une chaîne de bits d'un quotient (Q) ;

un processus de stockage de la première chaîne de bits déterminée par le premier circuit logique dans un premier registre (102) ;

un processus, par un deuxième circuit logique (107), de calcul d'un premier reste partiel (R) sur la base de la première chaîne de bits et un reste partiel en réalisant une première opération qui n'inclut pas une opération exponentielle dans une opération de reste partiel ;

un processus de stockage du premier reste partiel calculé par le deuxième circuit logique dans un second registre (103) ; et

un processus, par un troisième circuit logique (105), de calcul du reste partiel en réalisant une seconde opération qui inclut une opération exponentielle, en utilisant le premier reste partiel et la première chaîne de bits stockée dans le premier registre dans un cycle précédent dans des répétitions d'opérations ;

dans lequel le processus de détermination, par le premier circuit logique, de la première chaîne de bits utilise le premier reste partiel stocké dans le second registre dans un cycle précédent.

4.  Procédé de commande pour l'unité de traitement arithmétique (1) selon la revendication 3, comprenant en outre un processus, par le premier circuit logique (104), de découverte d'une solution par un premier nombre de bits par cycle quand un nombre de répétitions d'opérations (i) est égal ou inférieur à une valeur de seuil prédéterminée, et de découverte d'une solution par un second nombre de bits supérieur au premier nombre de bites par cycle quand le nombre de répétitions d'opérations est supérieur à la valeur de seuil prédéterminée.

# FIG. 1

EP 3 869 327 B1

# FIG. 2

START OF OPERATION
RECEIVE INPUT OF x

INITIALIZE REGISTERS
$Q_i=0, preR_i=x, q_{i-1}=0$ — A1

REPEAT UNTIL $Q_i$ WITH
REQUIRED NUMBER OF
DIGITS IS WORKED OUT — A2

A3 — LOGIC CIRCUIT A
DETERMINE $q_i$

LOGIC CIRCUIT C2
$R_i=preR_i-q_{i-1}^2$ — A5

A4 — LOGIC CIRCUIT B
$Q_{i+1}=Q_i+q_i$

LOGIC CIRCUIT C1
$preR_{i+1}=R_i-2q_iQ_i$ — A6

A7

END OF OPERATION
OUTPUT $Q_i$

# FIG. 3

EP 3 869 327 B1

# FIG. 4

START OF OPERATION
RECEIVE INPUT OF in
(iexp, ifrac)

PREPROCESSING
GENERATE e AND x — B1

eh=e/2 — B2

INITIALIZE REGISTERS
$Q_i=0, preR_i=x, q_{i-1}=0$ — A1

REPEAT UNTIL $Q_i$ WITH
REQUIRED NUMBER OF
DIGITS IS WORKED OUT — A2

A3 — LOGIC CIRCUIT A
DETERMINE $q_i$

A5 — LOGIC CIRCUIT C2
$R_i=preR_i-q_{i-1}^2$

A4 — LOGIC CIRCUIT B
$Q_{i+1}=Q_i+q_i$

A6 — LOGIC CIRCUIT C1
$preR_{i+1}=R_i-2q_iQ_i$

A7

oexp=eh
ofrac=$Q_i$ — B3

END OF OPERATION
OUTPUT out (oexp, ofrac)

FIG. 5

# FIG. 6

| INPUT x (BINARY NUMBER) | OUTPUT $Q_0$ (BINARY NUMBER) |
|---|---|
| LESS THAN 01.01 | 1.0001 |
| EQUAL TO OR GREATER THAN 01.01 BUT LESS THAN 01.10 | 1.0011 |
| EQUAL TO OR GREATER THAN 01.10 BUT LESS THAN 10.00 | 1.0101 |
| EQUAL TO OR GREATER THAN 10.00 BUT LESS THAN 10.01 | 1.0111 |
| EQUAL TO OR GREATER THAN 10.01 BUT LESS THAN 10.11 | 1.1001 |
| EQUAL TO OR GREATER THAN 10.11 BUT LESS THAN 11.00 | 1.1011 |
| EQUAL TO OR GREATER THAN 11.00 BUT LESS THAN 11.11 | 1.1101 |
| EQUAL TO OR GREATER THAN 11.11 | 1.1111 |

# FIG. 7

START OF OPERATION
RECEIVE INPUT OF in
(iexp, ifrac)

PREPROCESSING
GENERATE e AND x — B1

eh=e/2 — B2

DETERMINE INITIAL VALUE
DETERMINE $Q_0$ AND $preR_0$ FROM x — C1

INITIALIZE REGISTERS
$Q_i=Q_0, preR_i=preR_0, q_{i-1}=0$ — A1

REPEAT UNTIL $Q_i$ WITH
REQUIRED NUMBER OF
DIGITS IS WORKED OUT — A2

A3 — LOGIC CIRCUIT A
DETERMINE $q_i$

A5 — LOGIC CIRCUIT C2
$R_i=preR_i-q_{i-1}^2$

A4 — LOGIC CIRCUIT B
$Q_{i+1}=Q_i+q_i$

A6 — LOGIC CIRCUIT C1
$preR_{i+1}=R_i-2q_iQ_i$

— A7

oexp=eh
ofrac=$Q_i$ — B3

END OF OPERATION
OUTPUT out (oexp, ofrac)

20

# FIG. 8

$Q$  501

$Q_i$

i

$R$  502

$R_i$

503

DETERMINATION OF $q_i$

$q_i$

p1

504

$Q_{i+1}=Q_i+q_i$

$Q_{i+1}$

505

$R_{i+1}=R_i-2q_iQ_i-q_i^2$

$R_{i+1}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9269892 A

- JP 11353158 A

### Non-patent literature cited in the description

- 167 MHz radix-8 divide and square root using overlapped radix-2 stages. **PRABHU J A et al.** PROCEEDINGS OF THE 12TH SYMPOSIUM ON BATH, UK. IEEE COMPUT. SOC, 19 July 1995, 155-162
- RADIX-4 SQUARE ROOT WITHOUT INITIAL PLA. **ERCEGOVAC M D et al.** IEEE TRANSACTIONS ON COMPUTERS. IEEE, 01 August 1990, vol. 39, 1016-1024

- Computer Arithmetic, chapter 21: Square-Rooting methods. **BEHROOZ PARHAMI ED ; PARHAMI BEHROOZ.** COMPUTER ARITHMETIC : ALGORITHMS AND HARDWARE DESIGNS. OXFORD UNIVERSITY PRESS, 01 January 2000, 345-357